# EUROPEAN PATENT APPLICATION

(11) **EP 1 571 606 A1**
(43) Date of publication of application: **07.09.2005**
(21) Application number: 03812324.6
(22) Date of filing: 28.11.2003
(51) Int. Cl.: G07F 7/02, G06F 17/60

(54) **CARDLESS SALES METHOD AND SYSTEM**

(30) Priority: 02.12.2002 JP 2002350040
(71) Applicant: Kabushiki Kaisha Nippon Conlux, Tokyo 100-0011 (JP)
(72) Inventor: OTA, Michihiro c/o KABUSHIKI KAISHA NIPPON CONLUX, Chiyoda-ku, Tokyo 100-0011 (JP)
(74) Representative: Burke, Steven David
(86) International application number: PCT/JP2003/015202
(87) International publication number: WO 2004/051584

(57) **Abstract**

A cardless sales method and system for purchasing a commodity by transmitting card issuing information stored in a mobile communication terminal to a sales processing device and capable of promptly authenticating card information by the sales processing device alone and safely handling the card information. Card authentication information (35) issued from a card issuer (1) and card issuing information (34) including card information (33) are stored in a mobile communication terminal (7). Upon sales processing using the card issuing information (34), the card issuing information is transmitted from the mobile communication terminal (7) to a sales processing device (18) and the sales processing device (18) judges validity of the card information according to the card authentication information (35) contained in the card issuing information (34) received from the mobile communication terminal. When the card information (33) is judged to be valid, a predetermined sales processing is executed by the sales processing device (18).

## Description

### TECHNICAL FIELD

The present invention relates to a cardless sales method and system which enables the purchase of commodities or the enjoyment of services through a mobile communication terminal by storing card issuing information issued by a card issuing institution in the mobile communication terminal:

### BACKGROUND ART

Conventionally, there has been known a system which enables the purchase of commodities or the enjoyment of services by storing card information issued by a card issuing institution in a mobile communication terminal and sending the card information to a sales processing device, and such system is disclosed in International Publication No. WO 01/69346 titled "OPTICAL PAYMENT TRANSCEIVER AND SYSTEM USING THE SAME" (hereafter to be referred to as "the Patent Document 1 ").

The system disclosed in the Patent Document 1 is designed such that card information is received from a card information issuing terminal and stored in storage means of a mobile terminal, and when a commodity is to be purchased, the card information is transmitted to a vending apparatus which is online connected to a card transaction settlement institution to purchase the commodity.

However, if the system as disclosed in the Patent Document 1 is applied to sales processing executed by an automatic vending machine, for example, it will become necessary to newly add means for authenticating online the card information to all the automatic vending machines installed at various sites. This will pose a problem that additional costs are required to modify the existing machines, to newly manufacture the machines, and to operate, maintain and manage the system once it is started running.

Further, in case of an offline operation in which a vending apparatus alone is used to accumulate sales information including card information, the card information included in the accumulated sales information is authenticated only after being collected by a settlement institution. Therefore, there is a risk of allowing a purchase using fraudulent card information.

The system also involves an inconvenience of requiring the input operation of data that is required for authentication when transmitting card issuing information to a sales processing device performing sales processing, as well as a risk that the card information stored in the sales processing device is leaked to a third party.

### DISCLOSURE OF THE INVENTION

Therefore the present invention has an object to provide a cardless sales method and system that is capable of authenticating card information safely and immediately by the use of a sales processing device alone, and enables the sales of a commodity or service to be performed by simple operations.

To achieve the above object, a cardless sales method according to the present invention comprises storing card issuing information including card authentication information and card information issued by a card issuer in a mobile communication terminal; transmitting the card issuing information from the mobile communication terminal to a sales processing device when executing sales processing using the card issuing information; determining a validity of the card information by the sales processing device based on the card authentication information included in the card issuing information received from the mobile communication terminal; and executing predetermined sales processing by the sales processing device when the card information is determined to be valid.

The sales processing device may be automatic vending machine, and the automatic vending machine may permit the sales transaction using the card issuing information when the card information is determined to be valid based on the card authentication information included in the card issuing information received from the mobile communication terminal, and may store and accumulate sales price information related to the sales transaction together with the card information when the sales transaction is executed.

The card authentication information may be generated by using a password managed in confidence between the card issuer and the sales processing device or at least a part of the card information.

The card issuing information may include first information obtained by encrypting the card information with a first key; and second information obtained by encrypting with a second key the card information encrypted with the first key, and the mobile communication terminal stores information including the first information and the second information as the card issuing information.

The card issuing information may include information obtained by encrypting synthesized information of the first information and the second information with a third key, and the mobile communication terminal stores the information obtained by encrypting synthesized information of the first information and the second information with the third key as the card issuing information.

The sales processing device may separate the first information and the second information from the card issuing information received from the mobile communication terminal; determines the validity of the card issuing information by encrypting the first information with the second key, and comparing the encrypted first information with the second information; and stores and accumulates sales price information related to the sales transaction together with the first information when a sales transaction has been performed using the card issuing information.

The sales processing device may decrypt the card issuing information received from the mobile communication terminal with the third key before separating the card issuing information into the first information and the second information.

The card issuer may collect the first information and the sales price information accumulated in the sales processing device; decrypt the first information with the first key to obtain the card information; and perform settlement processing on the sales price information based on the card information thus obtained.

Further, a cardless sales system according to the present invention comprises a card information issuing server that issues card issuing information including card authentication information and card information; a mobile communication terminal that receives the card issuing information issued by the card information issuing server through wireless communication and stores the received card issuing information; a sales processing device that performs predetermined sales processing based on the card issuing information received from the mobile communication terminal through communication with the mobile communication terminal; and a settlement server that collects sales information related to a sales transaction performed using the card issuing information from the sales processing device and settles the sales information, wherein the mobile communication terminal transmits the card issuing information from the mobile communication terminal to the sales processing device when sales processing is performed with the use of the card issuing information, and the sales processing device determines the validity of the card information based on the card authentication information included in the card issuing information received from the mobile communication terminal, and performs predetermined sales processing when the card information is determined to be valid.

The sales processing device may be an automatic vending machine, and the automatic vending machine may permit a sales transaction using the card issuing information when the card information is determined to be valid based on the card authentication information included in the card issuing information received from the mobile communication terminal, and may store and accumulate sales price information related the sales transaction together with the card information when the sales transaction has been performed.

The card authentication information may be generated by using a password managed in confidence between the card information issuing server and the sales processing device or at least a part of the card information.

The card information issuing server may comprise first encryption means for encrypting the card information with a first key; second encryption means for encrypting with a second key the card information encrypted by the first encryption means to generate the card authentication information; and card issuing information issuing means for synthesizing the card information encrypted by the first encryption means and the card authentication information generated by the second encryption means and transmitting the synthesized information to the mobile communication terminal as the card issuing information.

The card information issuing server may further comprise third encryption means for encrypting with a third key the information obtained by synthesizing the card information encrypted by the first encryption means and the card authentication information generated by the second encryption means, and the card issuing information issuing means may transmit the information encrypted by the third encryption means to the mobile communication terminal.

The mobile communication terminal may comprise storage means for storing the card issuing information issued by the card issuing information issuing means; and communication means for communicating with the sales processing means when sales processing is performed using the card issuing information to transmit the card issuing information stored in the storage means to the sales processing device.

The sales processing device may comprise separating means for separating the card issuing information received from the mobile communication terminal into the encrypted card information and the card authentication information; fourth encryption means for encrypting with the second key the encrypted card information obtained by the separation by the separating means; comparison means for comparing the information encrypted by the fourth encryption means with the card authentication information to determine the validity of the card issuing information; storing and accumulating means for storing and accumulating, when a sales transaction using the card issuing information has been performed, sales price information related to the sales transaction together with the encrypted card information.

The sales processing device may further comprise first decryption means for decrypting with the third key the card issuing information received from the mobile communication terminal, and the separating means may comprise separating means for separating the encrypted card information and the card authentication information from the information decrypted by the first decryption means; fourth encryption means for encrypting with the second key the encrypted card information separated by the separating means; comparison means for comparing the information encrypted by the fourth encryption means with the card authentication information to determine the validity of the card issuing information; and storing and accumulating means for storing and accumulating, when a sales transaction using the card issuing information has been performed, sales price information related to the sales transaction together with the encrypted card information.

The settlement server may comprise collecting means for collecting the encrypted card information accumulated in the storing and accumulating means of the sales processing device and the sales price information; second decryption means for decrypting with the first key the encrypted card information collected by the collecting means to obtain the card information; and settlement processing means for performing settlement processing on the sales price information based on the card information obtained by the decryption by the second decryption means.

Further, a cardless sales system according to the present invention may comprise card authentication information and card information; a mobile communication terminal that receives the card issuing information issued by the card information issuing server through wireless communication and stores the received card issuing information; an automatic vending machine that performs predetermined sales processing based on the card issuing information received from the mobile communication terminal through communication with the mobile communication terminal; and a settlement server that collects sales information related to a sales transaction performed using the card issuing information from the sales processing device and settles the sales information, wherein the card information issuing server may comprise first encryption means for encrypting the card information with a first key; second encryption means for encrypting with a second key the card information encrypted by the first encryption means to generate the card authentication information; synthesizing means for synthesizing the card information encrypted by the first encryption means and the card authentication information generated by the second encryption means; third encryption means for encrypting the information synthesized by the synthesizing means with a third key; and card issuing information issuing means for transmitting the information encrypted by the third encryption means to the mobile communication terminal as the card issuing information, the mobile communication terminal may comprise storage means for storing the card issuing information issued by the card issuing information issuing means; and communication means for communicating with the sales processing means when sales processing is performed with the use of the card issuing information to transmit the card issuing information stored in the storage means to the sales processing device, the automatic vending machine may comprise first decryption means for decrypting with the third key the card issuing information received from the mobile communication terminal; separating means for separating the encrypted card information and the card authentication information from the information obtained by the decryption by the first decryption means; fourth encryption means for encrypting with the second key the encrypted card information separated by the separating means; comparison means for comparing the information encrypted by the fourth encryption means with the card authentication information to determine the validity of the card issuing information; and storing and accumulating means for storing and accumulating, when a sales transaction using the card issuing information has been performed, sales price information related to the sales transaction together with the encrypted card information, and the settlement server may comprise collecting means for collecting the encrypted card information accumulated in the storing and accumulating means of the sales processing device and the sales price information; second decryption means for decrypting with the first key the encrypted card information collected by the collecting means to obtain the card information; and settlement processing means for performing settlement processing on the sales price information based on the card information obtained by the decryption by the second decryption means.

### BRIEF DESCRIPTION OF THE DRAWINGS

Fig. 1 is a model diagram illustrating the flow of card information in a cardless sales system according to the present invention;
Fig. 2 is a block diagram schematically illustrating the control structures of component devices of the cardless sales system according to the present invention;
Fig. 3 is a flowchart illustrating the processing executed by a card information issuing server in the cardless sales system according to the present invention;
Fig. 4 is a flowchart illustrating the processing executed by a mobile telephone in the cardless sales system according to the present invention;
Fig. 5 is a flowchart illustrating the processing executed by an automatic vending machine in the cardless sales system according to the present invention; and
Fig. 6 is a flowchart illustrating the processing executed by a settlement server in the cardless sales system according to the present invention.

### BEST MODE FOR CARRYING OUT THE INVENION

A detailed description will now be made of embodiment of a cardless sales method and system according to the present invention with reference to the attached drawings.

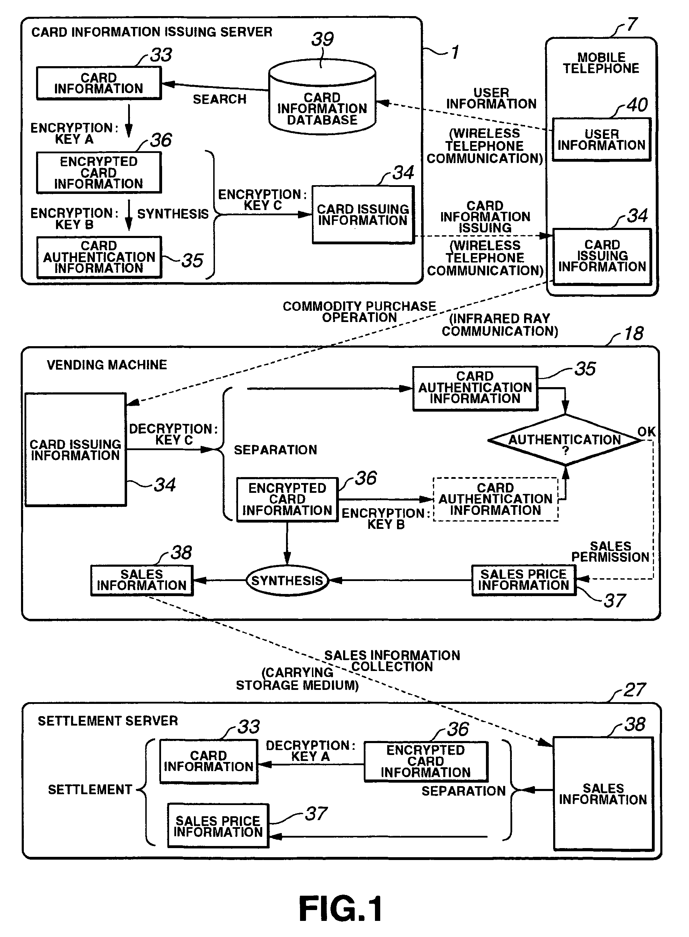

Fig. 1 is a model diagram illustrating the flow of card information in a cardless sales system according to the present invention. This cardless sales system is designed so that a mobile telephone 7, in which card issuing information 34 is stored, can be used to purchase a commodity from an automatic vending machine 18 serving as a sales processing device.

As shown in Fig. 1, the cardless sales system is composed of a card information issuing server 1 which issues card issuing information 34 including card authentication information 35 and encrypted card information 36; a mobile telephone 7 which wirelessly receives and stores the card issuing information 34 issued by the card information issuing server 1; an automatic vending machine 18 which performs predetermined sales processing based on the card issuing information 34 received from the mobile telephone 7 through short-range wireless communication such as infrared-ray communication with the mobile telephone 7; and a settlement server 27 which collects sales information 38 relating the sales using the card issuing information 34 from the automatic vending machine 18 to make a settlement.

The card information issuing server 1 encrypts card information 33 with a key A to generate encrypted card information 36, and further encrypts the encrypted card information 36 with a key B to generate card authentication information 35 separately.

The encrypted card information 36 and the card authentication information 35 are synthesized, and the synthesized information is further encrypted with a key C to generate card issuing information 34. The card issuing information 34 is transmitted to the mobile telephone 7.

The mobile telephone 7 stores the card issuing information 34 received from the card information issuing server 1 in its storage means, and transmits the card issuing information 34 to an automatic vending machine 18 from which a commodity can be purchased with the card issuing information 34, by short-range wireless communication such as infrared-ray communication.

The automatic vending machine 18 decrypts the card issuing information 34 received from the mobile telephone 7 with a key C to separate the same into the encrypted card information 36 generated by the card information issuing server 1 and the card authentication information 35.

The automatic vending machine 18 again encrypts the encrypted card information 36 with the key B to generate authentication data, and determines the validity the card issuing information 34 by verifying the authentication data against the card authentication information 35.

When the validity of the card issuing information 34 is approved, the sales transaction by the automatic vending machine 18 is permitted and thus the vending machine 18 performs sales processing with the use of the card issuing information 34.

Sales price information 37 relating to the sales transaction is stored together with the encrypted card information 36 as sales information 38.

The settlement server 27 collects the encrypted card information 36 and sales price information 37 accumulated in the automatic vending machine 18 by loading the same in a storage medium, and decrypts the encrypted card information 36 with the key A into the card information 33.

The settlement server 27 performs settlement processing on the sales price information 37 based on the decrypted card information 33.

The encryption processing with the key A by the card information issuing server 1, the decryption processing with key A by the settlement server 27, the encryption processing with the key B by the card information issuing server 1, the encryption processing with the key B by the automatic vending machine 18, the encryption processing with the key C by the card information issuing server 1, and the decryption processing with the key C by the automatic vending machine 18 may be performed by applying any desired encryption or decryption method in accordance with the strength of encryption required in each application of the system.

Additionally, the encryption and decryption processing involving the key C may be omitted depending on the security policy of the system.

The distribution method and the cycle of use of the keys are not limited particularly. In the structure example shown in Fig. 1, the key B and key C used by the automatic vending machine 18 and the key A used by the settlement server 27 are generated and distributed by the card information issuing server 1 before the system is put in operation.

Description will now be made of the control structures of the card information issuing server 1, the mobile telephone 7, the automatic vending machine 18, and the settlement server 27 of the cardless sales system shown in Fig. 1.

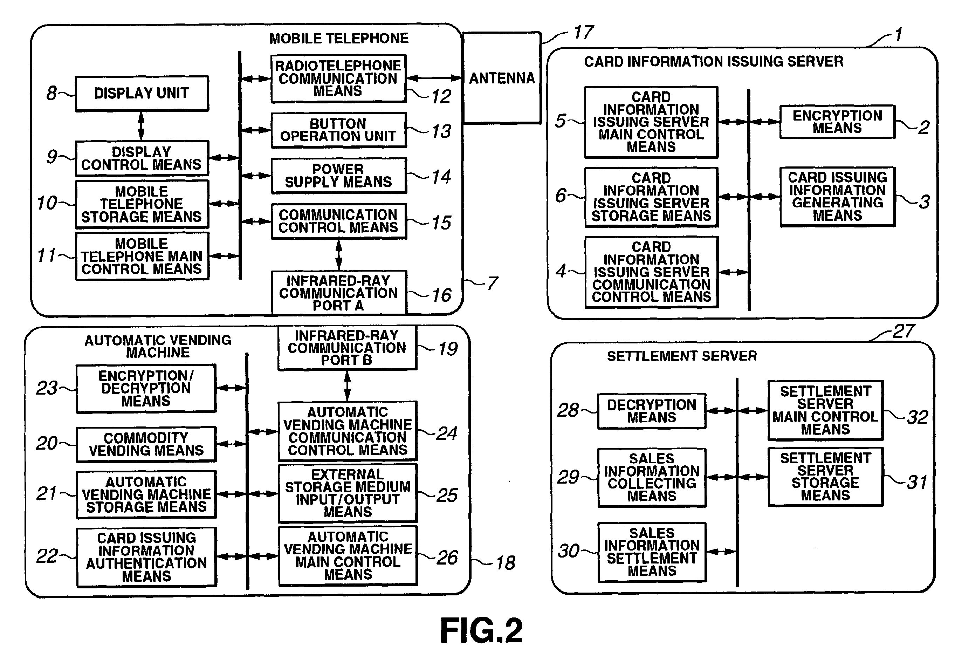

Fig. 2 is a block diagram schematically illustrating the respective control structures of the component devices of the cardless sales system according to the present invention.

In Fig. 2, the card information issuing server 1 includes card information issuing server main control means 5 for controlling the entire of the card information issuing server 1, a card information database 39, card information issuing server storage means 6 for storing keys used for encryption, encryption means 2 for performing encryption processing to generate the card issuing information 34, card issuing information generating means 3 for generating the card issuing information 34 from the card information 33 through several steps of encryption processing, and card information issuing server communication control means 4 for transmitting the generated card issuing information 34 to the user's mobile telephone 7.

The mobile telephone 7 includes mobile telephone main control means 11 for controlling the entire of the mobile telephone 7, a display unit 8 for notifying the user of the content of data in the mobile telephone 7 and the condition of the mobile telephone 7, display control means 9 for controlling the display unit 8, radiotelephone communication means 12 for controlling the data exchange with the card information issuing server 1, a button operation unit 13 for operating reception and transmission of the card issuing information 34, and for operating purchase of a commodity from the automatic vending machine 18, power supply means 14 for supplying power to the mobile telephone 7, mobile telephone storage means 10 for storing the card issuing information 34 received from the card information issuing server 1, an infrared-ray communication port A16 for transmitting the card issuing information 34 to the automatic vending machine 18 by means of infrared-ray communication, and communication control means 15 for controlling the infrared-ray communication port A16.

The automatic vending machine 18 includes an automatic vending machine main control means 26, an infrared-ray communication port B 19, commodity vending means 20, automatic vending machine storage means 21, card issuing information authentication means 22, encryption/decryption means 23, automatic vending machine communication control means 24, and external storage medium input/output means 25.

The automatic vending machine main control means 26 controls the entire of the automatic vending machine 18, and the automatic vending machine communication control means 24 controls the data exchange with the infrared-ray communication port A16 of the mobile telephone 7 via the infrared-ray communication port B 19.

The encryption/decryption means 23 decrypts the card issuing information 34 received from the mobile telephone 7, and also performs encryption for authentication of the encrypted card information 36.

The card issuing information authentication means 22 authenticates the card issuing information 34 based on information acquired by the encryption/decryption means 23, and if the card issuing information is verified to be valid, the card issuing information authentication means 22 transmits a control signal permitting the sales transaction to the commodity vending means 20.

Upon receiving the sales transaction permit signal from the card issuing information authentication means 22, the commodity vending means 20 performs automatic sales processing to vend the commodity.

The automatic vending machine storage means 21 stores and accumulates a set of the price information of the vended commodity and the encrypted card information 36 as the sales information 38.

The external storage medium input/output means 25 loads the sales information 38 accumulated in the automatic vending machine storage means 21 onto a storage medium.

The settlement server 27 is composed of decryption means 28, sales information collecting means 29, sales information settlement means 30, settlement server storage means 31, and settlement server main control means 32.

The settlement server main control means 32 controls the entire of the settlement server. The sales information collecting means 29 reads the sales information 38 from the storage medium and loads the read information into the settlement server storage means 31.

The settlement server storage means 31 stores and accumulates the sales information 38 collected from the automatic vending machine 18, information on the keys used by the decryption means 28, and information relating to the settlement processing of the sales information 38.

The decryption means 28 separates the collected sales information 38 into the encrypted card information 36 and sales price information 37, and decrypts the encrypted card information 36 to the card information 33.

The sales information settlement means 30 performs settlement processing on the sales price information based on the decrypted card information 33.

Description will now be made of the processing procedures of the cardless sales method performed by the cardless sales system as shown in Figs. 1 and 2. The description will be made sequentially of the processing of each of the component devices of the system, namely the card information issuing server 1, the mobile telephone 7, the automatic vending machine 18, and the settlement server 27.

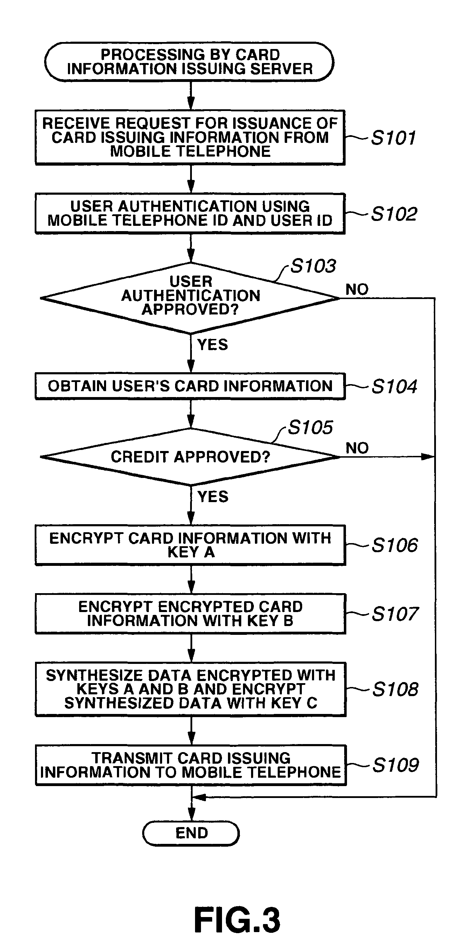

Fig. 3 is a flowchart illustrating the processing by the card information issuing server 1 of the cardless sales system.

The card information issuing server 1 first receives a request for transmission of the card issuing information 34 transmitted from the mobile telephone 7 in response to a user's predetermined button operation on the mobile telephone 7 (step S101). The card information issuing server 1 then performs user authentication with the use of the ID of the mobile telephone 7 related to the received transmission request (e.g. telephone number of the mobile telephone 7) and the user ID (step S102).

If the user authentication determines that the user is a valid user (YES in step S 103), the card information issuing server 1 acquires the user's card information 33 from the card information issuing server storage means 6 (step S104), and checks the validity period and credit status of the card information 33 (step S105).

If the card information 33 is approved (YES in step S105), the card information 33 is encrypted with the key A stored in the card information issuing server storage means 6 to generate encrypted card information 36 (step S106).

The information obtained by encrypting the card information 33 with the key A is further encrypted with the key B to generate card authentication information 35 (step S 107).

The encrypted card information 36 is synthesized with the card authentication information 35 and the entire of the synthesized information is encrypted with the key C to generate card issuing information 34 (step S108).

The card issuing information 34 thus generated is transmitted to the mobile telephone 7 by means of radiotelephone communication (step S109).

Next, the purchase processing by the mobile telephone 7 with the use of the card issuing information 34 will be described.

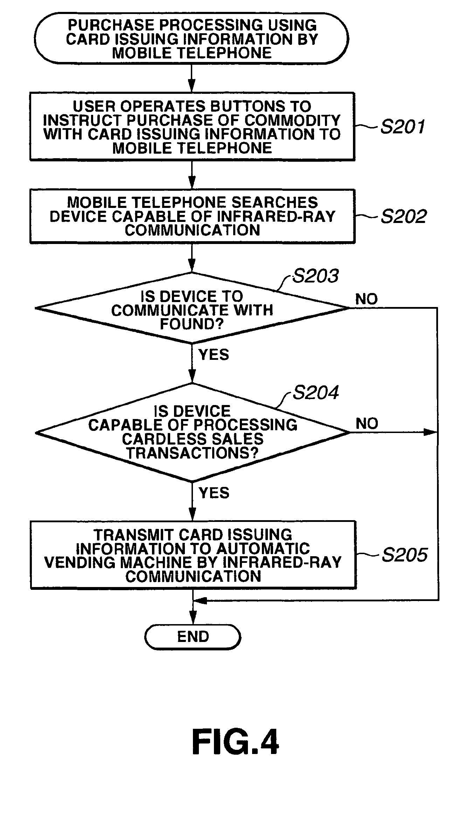

Fig. 4 is a flowchart illustrating the processing by the mobile telephone 7 in the cardless sales system.

When the user operates buttons on the mobile telephone 7 to instruct a purchase with the card issuing information 34 (step S201), the mobile telephone 7 searches a device with which infrared-ray communication is possible via the infrared-ray communication port A16 (step S202).

If such device is found (YES in step S203), it is determined whether or not the device thus found is an automatic vending machine 18 from which a purchase is possible with the use of card issuing information 34 (step S204).

If it is determined that the device is an automatic vending machine 18 which is capable of performing cardless sales transactions with the card issuing information 34 (YES in step S204), the communication control means 15 transmits the card issuing information 34 stored in the mobile telephone storage means 10 to the automatic vending machine 18 via the infrared-ray communication port A16 (step S205).

Next, the cardless sales processing by the automatic vending machine 18 with the card issuing information 34 will be described.

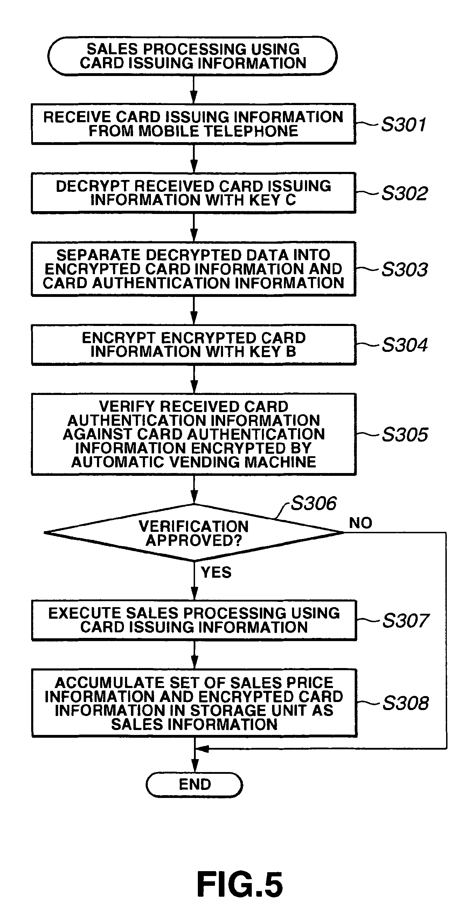

Fig. 5 is a flowchart illustrating the processing by the automatic vending machine 18 in the cardless sales system.

The automatic vending machine communication control means 24 receives the card issuing information 34 transmitted from the infrared-ray communication port A16 of the mobile telephone 7 via the infrared-ray communication port B19, and stores the received card issuing information 34 in the automatic vending machine storage means 21 (step S301).

The card issuing information 34 stored in the automatic vending machine storage means 21 is then decrypted by the encryption/decryption means 23 with the key C (step S302).

The card issuing information authentication means 22 separates the data decrypted by the encryption/decryption means 23 with the key C into the encrypted card information 36 and card information authentication information (step S303), and the encrypted card information 36 obtained by the separation is again encrypted by the encryption/decryption means 23 with the key B to generate card information authentication data (step S304).

Further, the card issuing information authentication means 22 verifies the card authentication information 35 obtained in step S303 against the card information authentication data generated in step S304 (step S305).

If the validity of the card issuing information is authenticated as the result the verification (YES in step S306), the card issuing information authentication means 22 transmits a sales transaction permit signal to the commodity vending means 20 and performs a series of controls on the sales processing (step S307).

The commodity vending means 20 synthesizes the sales price information 37 of the vended commodity with the encrypted card information 36 obtained by the separation in step S303 to generate sales information 38, and stores and accumulates the sales information 38 in the automatic vending machine storage means 21 (step S308).

The communication means between the mobile telephone 7 and the automatic vending machine 18 as shown in Figs. 4 and 5 is not limited to the infrared-ray communication as described above, but may be replaced by short-range wireless communication, or wired communication.

Description will now be made of the sales information collecting processing and the settlement processing on the sales price information 37 by the settlement server 27.

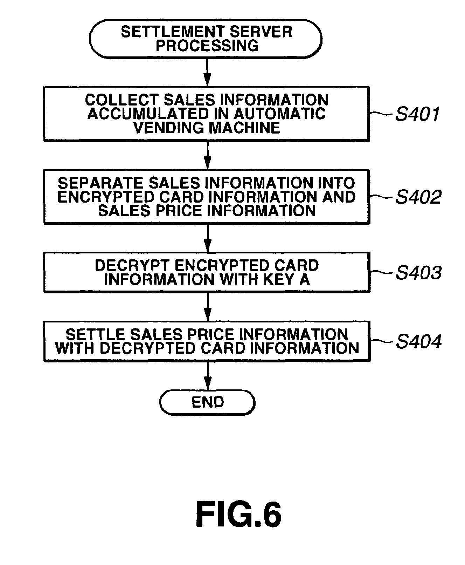

Fig. 6 is a flowchart illustrating the processing by the settlement server 27 in the cardless sales system.

Fig. 6 illustrates the processing that is performed when the sales information 38 accumulated in the automatic vending machine storage means 21 is loaded onto a predetermined storage medium by the external storage medium input/output means 25 of the automatic vending machine 18.

The sales information collecting means 29 loads the sales information 38 stored and accumulated in the automatic vending machine 18 onto the settlement server storage unit with the use of the storage medium (step S401), and separates the sales information 38 into the encrypted card information 36 and the sales price information 37 (step S402).

The decryption means 28 decrypts the encrypted card information 36 with the key A stored in the settlement server storage means 31 (step S403), and the sales information settlement means 30 settles the sales price information 37 based on the decrypted card information 33 (step S404).

In the descriptions made so far of the cardless sales system, the encrypted card information 36 is used as the authentication data to authenticate the card issuing information 34 in the automatic vending machine 18, but the authentication data is not limited to this. For example, a password managed in confidence or information generated with at least a part of the card information 33 may be used as the authentication data.

In addition, the method of collecting the sales information 38 is not limited to the method whereby the settlement server 27 collects the sales information 38 loaded on a storage medium. Instead, data communication means may be provided between the automatic vending machine 18 and the settlement server 27 so that the sales information 38 accumulated in the storage means of the automatic vending machine 18 is uploaded at a predetermined timing.

Further, the description of the embodiment above has been made of a case in which the sales processing device is an automatic vending machine 13. However, the present invention is, of course, also applicable to a case in which the sales processing device is a sales processing terminal installed in a store or the like which vends various commodities or provides various services.

### INDUSTRIAL APPLICABILITY

According to the present invention, when a vending apparatus performs sales processing with the use of card issuing information stored in a mobile communication terminal, the card information can be authenticated immediately by the vending apparatus alone, and thus the use of fraudulent card information can be prevented.

Further, the card information is always handled in the encrypted state during the transmission from the card information issuing server to the mobile communication terminal, during the transmission of the card information from the mobile communication terminal to the sales processing device, during the authentication processing and sales processing by the automatic vending machine, and during the settlement processing by the settlement server. Therefore, it is enabled to perform cardless sales transactions safely by simple operations requiring no signatures or authorization.

## Claims

1. A cardless sales method comprising:
storing card issuing information including card authentication information and card information issued by a card issuer in a mobile communication terminal;
transmitting the card issuing information from the mobile communication terminal to a sales processing device when executing sales processing using the card issuing information;
determining a validity of the card information by the sales processing device based on the card authentication information included in the card issuing information received from the mobile communication terminal; and
executing predetermined sales processing by the sales processing device when the card information is determined to be valid.

2. The cardless sales method according to Claim 1, wherein
the sales processing device is an automatic vending machine, and
the automatic vending machine permits the sales transaction using the card issuing information when the card information is determined to be valid based on the card authentication information included in the card issuing information received from the mobile communication terminal, and stores and accumulates sales price information related to the sales transaction together with the card information when the sales transaction is executed.

3. The cardless sales method according to Claim 1, wherein the card authentication information is generated by using a password managed in confidence between the card issuer and the sales processing device or at least a part of the card information.

4. The cardless sales method according to Claim 1, wherein
the card issuing information includes:
first information obtained by encrypting the card information with a first key; and
second information obtained by encrypting with a second key the card information encrypted with the first key, and
the mobile communication terminal stores information including the first information and the second information as the card issuing information.

5. The cardless sales method according to Claim 4, wherein
the card issuing information includes information obtained by encrypting synthesized information of the first information and the second information with a third key, and
the mobile communication terminal stores the information obtained by encrypting synthesized information of the first information and the second information with the third key as the card issuing information.

6. The cardless sales method according to Claim 4, wherein
the sales processing device separates the first information and the second information from the card issuing information received from the mobile communication terminal;
determines the validity of the card issuing information by encrypting the first information with the second key, and comparing the encrypted first information with the second information; and
stores and accumulates sales price information related to the sales transaction together with the first information when a sales transaction has been performed using the card issuing information.

7. The cardless sales method according to Claim 5, wherein the sales processing device decrypts the card issuing information received from the mobile communication terminal with the third key before separating the card issuing information into the first information and the second information.

8. The cardless sales method according to Claim 4, wherein the card issuer collects the first information and the sales price information accumulated in the sales processing device;
decrypts the first information with the first key to obtain the card information; and
performs settlement processing on the sales price information based on the card information thus obtained.

9. A cardless sales system comprising:
a card information issuing server that issues card issuing information including card authentication information and card information;
a mobile communication terminal that receives the card issuing information issued by the card information issuing server through wireless communication and stores the received card issuing information;
a sales processing device that performs predetermined sales processing based on the card issuing information received from the mobile communication terminal through communication with the mobile communication terminal; and
a settlement server that collects sales information related to a sales transaction performed using the card issuing information from the sales processing device and settles the sales information,
wherein the mobile communication terminal transmits the card issuing information from the mobile communication terminal to the sales processing device when sales processing is performed with the use of the card issuing information, and
the sales processing device determines the validity of the card information based on the card authentication information included in the card issuing information received from the mobile communication terminal, and performs predetermined sales processing when the card information is determined to be valid.

10. The cardless sales system according to Claim 9, wherein
the sales processing device is an automatic vending machine, and
the automatic vending machine permits a sales transaction using the card issuing information when the card information is determined to be valid based on the card authentication information included in the card issuing information received from the mobile communication terminal, and stores and accumulates sales price information related the sales transaction together with the card information when the sales transaction has been performed.

11. The cardless sales system according to Claim 9, wherein the card authentication information is generated by using a password managed in confidence between the card information issuing server and the sales processing device or at least a part of the card information.

12. The cardless sales system according to Claim 9, wherein
the card information issuing server comprises:
first encryption means for encrypting the card information with a first key;
second encryption means for encrypting with a second key the card information encrypted by the first encryption means to generate the card authentication information; and
card issuing information issuing means for synthesizing the card information encrypted by the first encryption means and the card authentication information generated by the second encryption means and transmitting the synthesized information to the mobile communication terminal as the card issuing information.

13. The cardless sales system according to Claim 12, wherein
the card information issuing server further comprises third encryption means for encrypting with a third key the information obtained by synthesizing the card information encrypted by the first encryption means and the card authentication information generated by the second encryption means, and
the card issuing information issuing means transmits the information encrypted by the third encryption means to the mobile communication terminal.

14. The cardless sales system according to Claim 12, wherein
the mobile communication terminal comprises:
storage means for storing the card issuing information issued by the card issuing information issuing means; and
communication means for communicating with the sales processing means when sales processing is performed using the card issuing information to transmit the card issuing information stored in the storage means to the sales processing device.

15. The cardless sales system according to Claim 12, wherein
the sales processing device comprises:
separating means for separating the card issuing information received from the mobile communication terminal into the encrypted card information and the card authentication information;
fourth encryption means for encrypting with the second key the encrypted card information obtained by the separation by the separating means;
comparison means for comparing the information encrypted by the fourth encryption means with the card authentication information to determine the validity of the card issuing information;
storing and accumulating means for storing and accumulating, when a sales transaction using the card issuing information has been performed, sales price information related to the sales transaction together with the encrypted card information.

16. The cardless sales system according to Claim 13, wherein
the sales processing device further comprises first decryption means for decrypting with the third key the card issuing information received from the mobile communication terminal, and
the separating means comprises:
separating means for separating the encrypted card information and the card authentication information from the information decrypted by the first decryption means;
fourth encryption means for encrypting with the second key the encrypted card information separated by the separating means;
comparison means for comparing the information encrypted by the fourth encryption means with the card authentication information to determine the validity of the card issuing information; and
storing and accumulating means for storing and accumulating, when a sales transaction using the card issuing information has been performed, sales price information related to the sales transaction together with the encrypted card information.

17. The cardless sales system according to Claim 15, wherein
the settlement server comprises:
collecting means for collecting the encrypted card information accumulated in the storing and accumulating means of the sales processing device and the sales price information;
second decryption means for decrypting with the first key the encrypted card information collected by the collecting means to obtain the card information; and
settlement processing means for performing settlement processing on the sales price information based on the card information obtained by the decryption by the second decryption means.

18. A cardless sales system comprising:
a card information issuing server that issues card issuing information including card authentication information and card information;
a mobile communication terminal that receives the card issuing information issued by the card information issuing server through wireless communication and stores the received card issuing information;
an automatic vending machine that performs predetermined sales processing based on the card issuing information received from the mobile communication terminal through communication with the mobile communication terminal; and
a settlement server that collects sales information related to a sales transaction performed using the card issuing information from the sales processing device and settles the sales information, wherein
the card information issuing server comprises:
first encryption means for encrypting the card information with a first key;
second encryption means for encrypting with a second key the card information encrypted by the first encryption means to generate the card authentication information;
synthesizing means for synthesizing the card information encrypted by the first encryption means and the card authentication information generated by the second encryption means;
third encryption means for encrypting the information synthesized by the synthesizing means with a third key; and
card issuing information issuing means for transmitting the information encrypted by the third encryption means to the mobile communication terminal as the card issuing information,
the mobile communication terminal comprises:
storage means for storing the card issuing information issued by the card issuing information issuing means; and
communication means for communicating with the sales processing means when sales processing is performed with the use of the card issuing information to transmit the card issuing information stored in the storage means to the sales processing device,
the automatic vending machine comprises:
first decryption means for decrypting with the third key the card issuing information received from the mobile communication terminal;
separating means for separating the encrypted card information and the card authentication information from the information obtained by the decryption by the first decryption means;
fourth encryption means for encrypting with the second key the encrypted card information separated by the separating means;
comparison means for comparing the information encrypted by the fourth encryption means with the card authentication information to determine the validity of the card issuing information; and
storing and accumulating means for storing and accumulating, when a sales transaction using the card issuing information has been performed, sales price information related to the sales transaction together with the encrypted card information, and
the settlement server comprises:
collecting means for collecting the encrypted card information accumulated in the storing and accumulating means of the sales processing device and the sales price information;
second decryption means for decrypting with the first key the encrypted card information collected by the collecting means to obtain the card information; and
settlement processing means for performing settlement processing on the sales price information based on the card information obtained by the decryption by the second decryption means.
